**Europäisches Patentamt**

(19) **European Patent Office**

**Office européen des brevets**

(11) Publication number: **0 107 235**
**B1**

(12) **EUROPEAN PATENT SPECIFICATION**

(45) Date of publication of patent specification: **07.01.87**

(21) Application number: **83201438.5**

(22) Date of filing: **07.10.83**

(51) Int. Cl.⁴: **G 11 B 5/52**

(54) **Magnetic-tape scanning device and method of manufacturing such a device.**

(30) Priority: **11.10.82 NL 8203922**

(43) Date of publication of application:
**02.05.84 Bulletin 84/18**

(45) Publication of the grant of the patent:
**07.01.87 Bulletin 87/02**

(84) Designated Contracting States:
**DE FR GB**

(56) References cited:
**GB-A-1 108 142**
**US-A-3 516 146**
**US-A-3 638 934**
**US-A-3 670 113**
**US-A-3 679 838**
**US-A-3 867 725**

(73) Proprietor: **N.V. Philips' Gloeilampenfabrieken**
**Groenewoudseweg 1**
**NL-5621 BA Eindhoven (NL)**

(72) Inventor: **Van Rooij, Juliaan J. M. R.**
**c/o INT. OCTROOIBUREAU B.V. Prof. Holstlaan 6**
**NL-5656 AA Eindhoven (NL)**

(74) Representative: **Van Weele, Paul Johannes Frits**
**et al**
**INTERNATIONAAL OCTROOIBUREAU B.V. Prof.**
**Holstlaan 6**
**NL-5656 AA Eindhoven (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a magnetic-tape scanning device comprising: a spindle; at least one magnetic head which is rotatable in a circular path around the spindle axis; a rotatable scanning means which carries the at least one magnetic head and which is rotatable about the spindle axis; a stationary scanning means having an external guide surface which is concentric with the spindle axis for guiding a loop of magnetic tape past the at least one magnetic head, and having an edge which is spaced a small distance from the rotatable scanning means so that a narrow axial air gap is formed between the rotatable and the stationary scanning means; transformer means which comprise a rotatable transformer ring which is concentric with the spindle axis and which is secured to the rotatable scanning means, and a stationary transformer ring which is secured to the stationary scanning means opposite said rotatable transformer ring so that a narrow axial air gap is formed between said rings; and means for securing at least one of the two transformer rings to the relevant scanning means, which means of securing comprise a plurality of cylindrical supports for the respective transformer ring, each of which supports has a cylindrical surface and first and second end faces, and which means of securing further comprise a first layer of adhesive between the first end face of each support and the transformer ring and a second layer of adhesive by which the transformer ring is secured to the relevant scanning means.

Such magnetic tape scanning devices are employed in magnetic video-tape recorders, for example, type VR 2020 manufactured by the Applicant. The transformer rings provide the contactless signal transfer from and to the rotating magnetic heads *via* the air gap between the two transformer rings. In this known magnetic-tape scanning device the stationary transformer ring is supported by three supports.

For an efficient signal transfer between the two transformer rings the axial spacing between the two transformer rings should be very small, of the order of nominally 60 microns with a tolerance of approximately 30 microns to each side. This small width of the air gap should be maintained within a temperature range from −25°C to +75°C and for relative humidity of 95% at 55°C. Since the rotatable transformer ring is arranged on the rotatable scanning means and the stationary transformer ring on the stationary scanning means the width of the air gap between the two transformer rings will depend on the width of the axial air gap between the rotatable and the stationary scanning means. This necessitates an accurate adjustment of the axial distance of each transformer ring relative to the gap-bounding edge of the particular scanning means on which that transformer ring is mounted. When the rotatable scanning means is mounted on the stationary scanning means the axial air gap between the two scanning means is adjusted accurately under standard conditions. Temperature variations of the magnetic-tape scanning device may effect the width of the axial air gap between the scanning means, which has a direct influence on the air gap between the two transformer rings.

In the manufacture of this known magnetic-tape scanning device the first end faces of the three supports are glued to that side of the transformer ring which is remote from the air gap by means of the first layer of adhesive. When the first layers of adhesive have cured the transformer ring is placed in a lathe and the second end faces of the supports are accurately machined. These second end faces serve to co-operate with a machined portion of the scanning means. This portion of the scanning means should also be machined accurately, in particular the axial distance between the gap-bounding edge of the scanning means and said machined portion must be formed very accurately and with very small tolerance of the order of magnitude of 10 microns. Drops of adhesive are now applied to that side of the transformer ring where the supports are situated, specifically at locations between the supports. After this the transformer ring is placed in the scanning means, the applied drops of adhesive connect the transformer ring directly to the scanning means. Consequently, no layer of adhesive is present between the second end faces of the supports and the scanning means. This is because layers of adhesive at these locations would affect the axial position of the transformer ring and, as a result of the sensitivity to moisture and heat of the known types of adhesive, would give rise to variations of the aforesaid axial distance and thus to variations of the air gap between the two transformer rings.

It has been found that in the known magnetic-tape scanning device the thickness of the layer of adhesive between the transformer ring and the scanning means may still vary, in particular under the influence of atmospheric moisture, such that the layer of adhesive becomes permanently thicker, which results in an undesired reduction of the air gap between the transformer rings.

It is the object of the invention to provide a magnetic-tape scanning device of the type mentioned in the opening paragraph in which the dimension of the air gap between the tranformer rings can be smaller than in the known magnetic-tape scanning device and is less affected by atmospheric moisture, which device is cheaper to manufacture and demands a less intricate assembly process. The invention is characterized in that the said relevant scanning means is formed with through-bores which receive the supports with clearance, and said second layers of adhesive are situated in said clearances, substantially exclusively between the walls of the through-bores and the cylindrical surfaces of the supports.

In a magnetic-tape scanning device in accordance with the invention the second layer of adhesive is subjected only to shear stress by axial forces exerted on the transformer ring. Conversely, the second layer of adhesive can exert forces only in the shear direction on the transformer ring. However, variations in the thickness of the second layer of adhesive as a result of variations in temperature and relative humidity do not occur in the shear direction, so that in principle the axial position of the transformer ring is not influenced at all by such variations. The axial position of the transformer ring relative to the gap-bounding edge of the associated scanning means can be adjusted by accurate auxiliary tools and does not depend on the length of the supports. A preferred embodiment of the invention is characterized in that between the transformer ring and the scanning means which are connected to each other by the means of securing is an axial gap of sufficient width to preclude the possibility of excess adhesive from the first layers of adhesive between the first end faces of the supports and said transformer ring contacting said scanning means.

The use of the invention ensures that only the first layers of adhesive can influence the axial position of the transformer ring relative to the associated scanning means.

Another embodiment of the invention makes it possible to obtain a very short cycle time during assembly and is characterized in that the supports are made of a radiation-transparent material and at least one of the layers of adhesive is of a type of adhesive which cures under the influence of radiation. This embodiment is possible because the supports are arranged in through-bores, so that the second end faces of the supports can be exposed to radiation, for example ultraviolet light.

The invention also relates to a method of manufacturing an assembly to be provided in a device according to the invention, which method is characterized in that the transformer ring and the relevant scanning means to which said transformer ring is to be secured are arranged on a auxiliary tool accurately in the desired positions relative to each other, the transformer ring and the scanning means being supported by the tool at the sides of the transformer ring and the scanning means which will face the air gap between the two scanning means, respectively, and the supports are inserted into through-bores of the scanning means from a side opposite to the transformer ring after the desired amounts of adhesive have been applied.

By the use of the invention the accuracy of the final product is determined not so much by the accuracy of the components used as by the accuracy of the auxiliary tool. The use of the invention allows much larger tolerances in the thicknesses of the transformer rings. The requirements imposed on the accuracy of the diameter and the length of the supports are not stringent.

The influence of the thickness of the first layers of adhesive may be reduced by the use of a variant of the method in accordance with the invention which is characterized in that the thickness of the first layers of adhesive, after application of said adhesive layers and while they are still deformable, is reduced by urging the supports and the transformer ring towards each other. If the final layer of adhesive is thinner, possible variations in thickness of said layer become smaller.

Since the accuracy of the product is now mainly determined by the accuracy of the auxiliary tool, it appears that the tolerances of the components may be at least ten times greater. The width of the axial air gap between the two transformer rings may be reduced to substantially half that existing in the known magnetic-tape scanning device. The deviations of the final product may become some 30% smaller. The diameter of the transformer rings may be reduced whilst maintaining the inductive coupling between the two transformer rings. This not only influences the price of the transformer rings but also mitigates problems which may arise as a result of warping of the transformer rings. The supports, when they are made of metal, may consist of simple blanks and they require no finishing operation. Satisfactory results have been obtained with acrylate adhesive, a so-called "second-generation" adhesive comprising two components. The curing time is approximately six minutes, so that a comparatively short cycle time can be achieved.

An embodiment of the invention will now be described in more detail, by way of example, with reference to the drawings, in which

Figure 1 is a part-sectional side view of a magnetic-tape scanning device showing the positions of the two transformer rings.

Figure 2 is a plan view of the stationary scanning means shown in Figure 1 with the stationary transformer ring mounted therein, and

Figure 3 is a sectional view of the stationary scanning means mounted, together with the stationary transformer ring, in an inverted position on an auxiliary tool during manufacture.

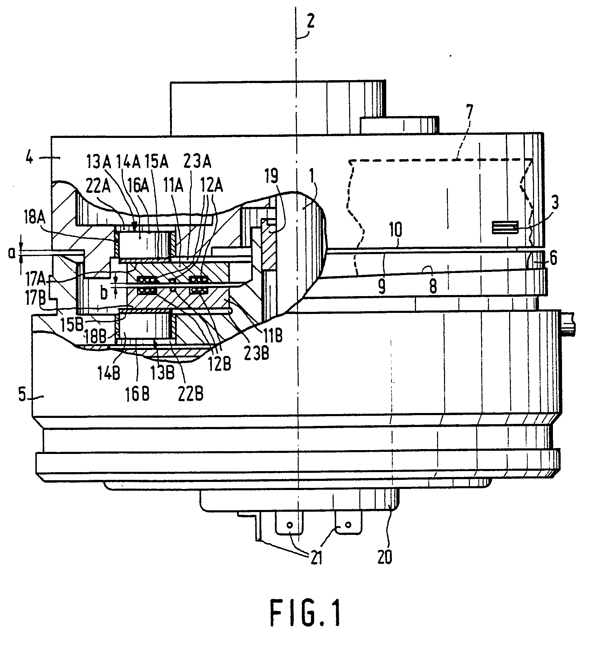

The magnetic-tape scanning device shown in the drawings comprises a spindle 1, the axis of which is represented by the dot-dash line 2. Two diametrically opposed magnetic heads 3, of which one is shown in Figure 1, are rotatable in a circular path around the spindle axis 2. A rotatable scanning means in the form of a cylindrical head drum 4 is mounted on the spindle 2 and carries the magnetic heads 3. A stationary scanning means 5, generally referred to as the "lower drum", has a cylindrical external guide surface 6 which is concentric with the spindle axis for guiding a loop of magnetic tape 7 past the magnetic heads 3. For simplicity only a small part of the magnetic tape 7 is shown, represented by broken lines, in Figure 1. In the axial direction the magnetic tape is guided by a guide shoulder 8 on the lower drum 5. This guide shoulder extends helically around the drum 5 so that the magnetic tape 7 can be guided in a helical path around the assembly comprising the head drum 4 and the lower drum 5. Thus, it is possible to record and read oblique tracks on the magnetic tape 7 by means of the magnetic heads 3. Such a method for guiding the magnetic tape and such a method of recording and reading the magnetic tape are customary in magnetic video-tape recorder for domestic use and will not be described in more detail. The lower drum has an edge 9 which is spaced a small distance from a similar, opposing edge 10 of the head drum, so that a small axial air gap $a$ is formed between the rotatable head drum 4 and the stationary lower drum 5.

In the interior of the assembly comprising the head drum and the lower drum are transformer means comprising a rotatable transformer ring 11A which is concentric with the spindle axis 2 and which is secured to the rotatable head drum, and a stationary transformer ring 11B which is secured to the stationary lower drum opposite the transformer ring 11A so that the narrow axial air gap $b$ is formed between the two transformer rings. These transformer rings are made of a sintered ceramic material and are surface-ground on their sides which face one another. Transformer windings 12A and 12B of an electrically conductive wire material are arranged in grooves in said facing sides of the transformer rings. The two transformer rings 11A and 11B are secured to the head of the drum and the lower drum respectively by means of securing. The means of securing comprise a plurality of cylindrical supports 13A and 13B for the transformer rings 11A and 11B respectively. The supports 13A and 13B comprise cylindrical surfaces 14A and 14B respectively, first end faces 15A and 15B respectively and second end faces 16A and 16B respectively. The means of securing comprise first layers of adhesive 17A and 17B between the first end faces of the supports and the transformer rings and second layers of adhesive 18A and 18B by which, via the supports 13A and 13B, the transformer rings are secured to the head drum 4 and the lower drum 5.

The spindle 1 is journalled in the lower drum 5 by means of two sleeve bearings 19, of which the upper bearing is visible in Figure 1. An electric motor for driving the head drum 4 is accommodated in the lower part of the lower drum 5. The motor is irrelevant to the present invention. Of the electric motor an end shield 20 and a number of terminals 21 for the necessary electrical connections are visible.

Both the head drum and the lower drum are formed with cylindrical through-bores 22A and 22B which receive the supports 13A and 13B with clearance. In these clearances the second layers of adhesive 18A and 18B are situated, substantially exclusively between the walls of the through-bores and the cylindrical surfaces of the supports. Consequently, the width of the air gap $b$ between the two transformer rings 11A and 11B depends solely on the width of the air gap $a$ between the head drum 4 and the lower drum 5 and on the thickness of the first layers of adhesive 17A and 17B. Variations in the width of the air gap $a$ due to temperature variations and variations in thickness of the layers of adhesive 17A and 17B due to temperature variations and/or variations in the relative humidity affect the width of the air gap $b$ between the transformer rings. The thicknesses of the second layers of adhesive 18A and 18B and variations in the thicknesses of these layers of adhesive, however, have no effect.

Between the transformer rings 11A, 11B and the head drum 4 and the lower drum 5, respectively, are axial gaps 23A and 23B of sufficient width to preclude the possibility of adhesive of the first layers of adhesive 17A and 17B which is squeezed from between the first ends of the suports 13A, 13B and the transformer rings coming into contact with the head drum 4 and with the lower drum 5, respectively.

The supports 13A and 13B may be made of a radiation-transparent material, for example glass or a plastics. Glass is preferred because of its small coefficient of thermal expansion and because glass does not absorb moisture from the air. The adhesive of the first and second layers may be of a type of adhesive which cures under the influence of radiation, for example an ultraviolet-curing adhesive. Such types of adhesive are known and are used, for example, for connecting optical components to each other. The radiation can reach the layers of adhesive via the transparent supports from the second end faces 16A and 16B of the supports.

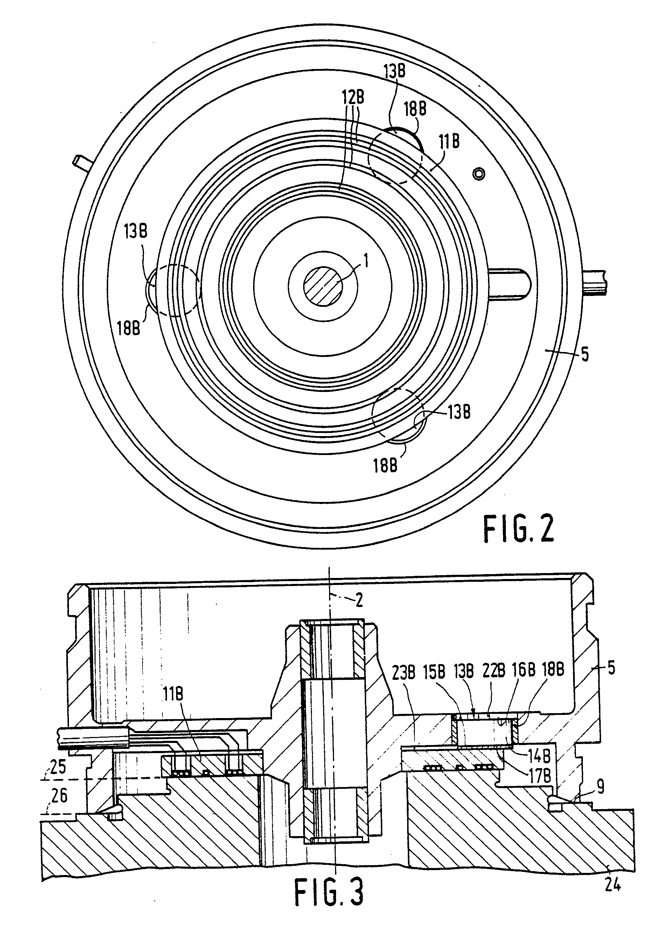

The method of manufacturing the magnetic-tape scanning device shown in Figures 1 and 2 will be described only in so far as the method relates to a fixing of the transformer ring 11B to the lower drum 5. As is shown in Figure 3, the transformer ring 11B and the lower drum 5 to which said ring is to be secured are placed upside down on an auxiliary tool 24 accurately in the desired position relative to each other. This auxiliary tool is formed with two accurately machined supporting surfaces 25 and 26 lying in planes which are spaced from each other at a distance which is specified within very close tolerances. The transformer ring 11B is supported by the supporting surface 25 and the lower drum 5 is supported by the supporting surface 26 at those sides of the ring and the drum which will face the air gap $b$ between the two transformer rings and the air gap $a$ between the head drum and the lower drum, respectively. The supports 13B are fitted from the top, from the opposite side of the lower drum 5 to the edge 9. After the desired amounts of adhesive have been applied the supports are inserted into the through-bores 22B. After application of the adhesive the thickness of the first layers of adhesive 17B is reduced by loading the supports with a weight, not shown, during the period in which the first layers of adhesive are curing and are consequently still deformable. By thus urging the supports and the transformer ring towards each other excess adhesive is squeezed sideways into the gap 23B between the transformer ring and the lower drum. This gap, as already stated, has a width such that no contact is possible between the excess adhesive and the lower drum.

## Claims

1. A magnetic tape scanning device comprising:

— a spindle (1);

— at least one magnetic head (3) which is rotatable in a circular path around the spindle axis;

— a rotatable scanning means (4) which carries the at least one magnetic head and which is rotatable about the spindle axis;

— a stationary scanning means (5) having an external guide surface (6) which is concentric with the spindle axis for guiding a loop of magnetic tape (7) past the at least one magnetic head, and having an edge (9) which is spaced a small distance from the rotatable scanning means so that a narrow axial air gap (a) is formed between the rotatable and the stationary scanning means;

— transformer means which comprise a rotatable transformer ring (11A) which is concentric with the spindle axis and which is secured to the rotatable scanning means, and a stationary tranformer ring (11B) which is secured to the stationary scanning means opposite said rotatable transformer ring so that a narrow axial air gap (b) is formed between said rings; and

— means for securing at least one of the two transformer rings to the relevant scanning means, which means of securing comprise a plurality of cylindrical supports (13) for the respective transformer ring, each of which supports has a cylindrical surface (14) and first and second end faces (15, 16), and which means of securing further comprise a first layer of adhesive (17) between the first end face of each support and the transformer ring and a second layer of adhesive (18) by which the transformer ring is secured to the relevant scanning means;

characterized in that

— the said relevant scanning means is formed with through-bores (22) which receive the supports with clearance, and

— said second layers of adhesive (18) are situated in said clearances, substantially exclusively between the walls of the through-bores and the cylindrical surfaces of the supports.

2. A magnetic-tape scanning device as claimed in Claim 1, characterized in that between the transformer ring (11) and the scanning means (4; 5) which are connected by the means of securing is an axial gap (23) of sufficient width to preclude the possibility of excess adhesive from the first layers of adhesive between the first end faces of the supports and said transformer ring contacting said scanning means.

3. A magnetic-tape scanning device as claimed in Claim 2, characterized in that the supports (13) are made of a radiation-transparent material and at least one of the layers of adhesive is of a type of adhesive which cures under the influence of radiation.

4. A method of manufacturing an assembly to be provided in a device as claimed in any of the preceding Claims, characterized in that

— the transformer ring (11B) and the relevant scanning means (5) to which said transformer ring is to be secured are arranged on an auxiliary tool (24) accurately in the desired positions relative to each other, the transformer ring (11B) and the scanning means (5) being supported by the tool at those sides of the transformer ring and the scanning means which will face the air gap (b) between the two transformer rings and the air gap (a) between the two scanning means (4; 5), respectively, and

— the supports (13B) are inserted into through-bores of the scanning means (5) from a side opposite to the transformer ring after the desired amounts of adhesive have been applied.

5. A method as claimed in Claim 4, characterized in that the thickness of the first layers of adhesive, after application of said adhesive layers and while they are still deformable, is reduced by urging the supports and the transformer ring towards each other.

## Patentansprüche

1. Magnetbandabtastanordnung mit:

— einer Spindel (1);

— wenigstens einem in einer kreisförmigen Bahn um die Spindelachse drehbaren Magnetkopf (3);

— einem um die Spindelachse drehbaren Abtastmittel (4), das den wenigstens einer Magnetkopf trägt;

— einem ortsfesten Abtastmittel (5) mit einer äusseren, gegenüber der Spindelachse koaxialen Führungsoberfläche (6) zum an dem wenigstens einen Magnetkopf Führen einer Magnetbandschleife (7) und mit einem Rand (9), der in einem geringen Abstand von dem drehbaren Abtastmittel liegt, so dass es zwischen dem drehbaren und dem ortsfesten Abtastmittel einen schmalen axialen Luftspalt (a) gibt;

— Transformatormitteln mit einem gegenüber der Spindelachse konzentrischen und auf dem drehbaren Abtastmittel befestigten drehbaren Transformatorring (11A) und einem unter Freilassung eines schmalen axialen Luftspaltes (b) gegenüber demselben auf den ortsfesten Abtastmitteln befestigten ortsfesten Transformatorring (11B),

— Mitteln zum Befestigen wenigstens eines der zwei Transformatorringe auf den betreffenden Abtastmitteln, wobei diese Befestigungsmittel eine Anzahl zylinderförmiger Träger (13) für den betreffenden Transformatorring aufweisen, wobei jeder Träger eine Manteloberfläche (14) und erste und zweite Stirnflächen (15, 16) aufweist und wobei die Befestigungsmittel weiterhin eine erste Klebschicht (17) zwischen der ersten Stirnfläche jedes Trägers und dem Transformatorring und eine zweite Klebschicht (18) aufweisen, durch welche Klebschichten der Transformatorring an den betreffenden Abtastmitteln befestigt wird;

dadurch gekennzeichnet, dass

— das genannte betreffende Abtastmittel mit hindurchgehenden Öffnungen (22) versehen ist, die die Träger mit Speilraum umgehen und

— die genannten zweiten Klebschichten (18) sich in den genannten Spielräumen befinden, im wesentlichen ausschliesslich zwischen den Wänden der Öffnungen und den Manteloberflächen der Träger.

2. Magnetbandabtastanordnung nach Anspruch 1, dadurch gekennzeichnet, dass zwischen dem Transformatorring (11) und den Abtastmitteln (4; 5), die durch die Befestigungsmittel verbunden sind, ein axialer Spalt (23) ausreichender Grösse ist zur Vermeidung der Möglichkeit, dass überflüssiger Klebstof von den ersten Klebschichten zwischen der ersten Stirnfläche der Träger und dem genannten Transformatorring die genannten Abtastmittel berührt.

3. Magnetbandabtastanordnung nach Anspruch 2, dadurch gekennzeichnet, dass die Träger (13) aus einem für Strahlung transparenten Material hergestellt sind und wenigstens eine der Klebschichten aus einer Klebesorte besteht, die unter dem Einfluss von Strahlung aushärtet.

4. Verfahren zum Herstellen eines Gefüges zum Gebrauch in einer Anordnung nach einem der vorstehenden Ansprüche, dadurch gekennzeichnet, dass

— der Transformatorring (11B) und die betreffenden Abtastmittel (5), auf denen der genannte Transformatorring befestigt werden soll, genau in der gewünschten Beziehung zueinander auf einem Hilfswerkzeug (24) angeordnet werden, wobei der transformatorring (11B) und die Abtastmittel (5) an denjenigen Seiten des Transformatorringes und der Abtastmittel von dem Werkzeug unterstützt werden, die dem Luftspalt (b) zwischen den zwei Transformatorringen und dem Luftspalt (a) zwischen den zwei Abtastmitteln (4, 5) zugewandt sind und

— die Träger (13B) von einer Seite gegenüber dem Transformatorring, nachdem die gewünschten Mengen Klebstoff angebracht sind, in die Öffnungen der Abtastmittel (5) angeordnet werden.

5. Verfahren nach Anspruch 4, dadurch gekennzeichnet, dass die Dicke der ersten Klebschichten nach dem Anbringen der genannten Klebschichten und während diese noch verformbar sind, dadurch verringert wird, dass die Träger und der Transformatorring zueinander gedrückt werden.

**Revendications**

1. Dispositif d'exploration de bande magnétique comportant:
— un arbre (1),
— au moins une tête magnétique (3) pouvant tourner selon une trajectoire circulaire autour de l'axe de l'arbre,
— un moyen d'exploration rotatif (4) portant au moins une tête magnétique et pouvant tourner autour de l'axe de l'arbre,
— un moyen d'exploration stationnaire (5) comportant d'une part une surface de guidage extérieure (6) qui est coaxiale à l'axe de l'arbre et doit guider une partie en forme de boucle d'une bande magnétique (7) le long de le (des) tête(s) magnétique(s), et d'autre part un bord (9) situé à faible distance du moyen d'exploration rotatif de sorte qu'une étroite fente d'air axiale (a) est formée entre le moyen d'exploration rotatif et le moyen d'exploration stationnaire,

— des moyens de transformation comportant d'une part un anneau de transformation rotatif (11A) coaxial à l'axe de l'arbre et fixé sur le moyen d'exploration rotatif, et d'autre part un anneau de transformation stationnaire (11B) qui en face de l'anneau rotatif est fixé sur le moyen d'exploration stationnaire de façon qu'une étroite fente d'air axiale (b) est formée entre les deux anneaux en question, ainsi que

— des moyens pour la fixation d'au moins un des deux anneaux de transformation au moyen d'exploration afférent, ces moyens de fixation comportant plusieurs supports cylindriques (13) devant supporter l'anneau de transformation afférent, alors que chaque support comporte une surface cylindrique (14) et des première et deuxième faces terminales (15, 16) tandis que lesdits moyens de fixation comportent encore une première couche d'agent adhésif (17) entre la première face terminale de chaque support et l'anneau de transformation, ainsi qu'une deuxième couche d'agent adhésif (18) par laquelle l'anneau de transformation est fixé sur le moyen d'exploration afférent, caractérisé en ce que

— ledit moyen d'exploration afférent est muni d'ouvertures continues (22) qui, avec un certain jeu, contiennent les supports, et que

— lesdites deuxièmes couches d'agent adhésif (18) se trouvent dans l'espace défini par ce jeu, et cela notamment quasi exclusivement entre la paroi interne des ouvertures continues et les surfaces cylindriques des supports.

2. Dispositif d'exploration de bande magnétique selon la revendication 1, caractérisé en ce qu'entre l'anneau de transformation (11) et le moyen d'exploration (4; 5) liés l'un à l'autre par les moyens de fixation, il existe une fente axiale (23) dont la largeur est suffisante pour empêcher un excédent d'agent adhésif des couches d'agent adhésif dites premières, éloigné de force d'entre les premières et deuxièmes faces terminales des supports et ledit anneau de transformation, d'entrer en contact avec ledit moyen d'exploration.

3. Dispositif d'exploration de bande magnétique selon le revendication 2, caractérisé en ce que les supports (13) sont réalisés en matériau transparent au rayonnement, et qu'au moins une des couches d'agent adhésif est formée par un agent adhésif que se durcit sous l'influence de rayonnement.

4. Procédé pour la fabrication d'un dispositif d'exploration de bande magnétique selon l'une quelconque des revendications précédentes, caractérisé en ce que

— l'anneau de transformation (11B) et le moyen d'exploration afférent (5) sur lequel cet anneau doit être fixé, sont placés, dans leurs positions réciproques précises, sur un outil auxiliare (24) qui supporte l'anneau (11B) et le moyen (5) par les faces d'anneau et de moyen qui doivent être orientées l'une vers l'entrefer (*b*) entre les anneaux de transformation et l'autre vers l'entrefer (*a*) entre les deux moyens d'exploration (4; 5), et qu'après l'application des quantités désirées d'agent adhésif, les supports (13B) sont insérés dans des ouvertures continues du moyen d'exploration (5) à partir d'une face située en regard de l'anneau de transformation.

5. Procédé de fabrication selon la revendication 4, caractérisé en ce que après l'application desdites couches d'agent adhésif et pendant qu'elles sont encore déformables, l'épaisseur des premières couches d'agent adhésif est diminuée du fait que les supports sont forcés vers l'anneau de transformation et vice versa.

FIG.1

FIG.2

FIG.3